# EUROPEAN PATENT SPECIFICATION

(11) **EP 3 380 717 B1**
(45) Date of publication and mention of the grant of the patent: **01.01.2020**
(21) Application number: 16804921.1
(22) Date of filing: 27.10.2016
(51) Int. Cl.: F03B 13/18

(54) **WAVE POWER DEVICE**
WELLENENERGIEVORRICHTUNG
DISPOSITIF À ÉNERGIE HOULOMOTRICE

(30) Priority: 26.11.2015 SE 1551536
(43) Date of publication of application: 03.10.2018
(73) Proprietor: Red N Alde Holding AB, 192 56 Sollentuna (SE)
(72) Inventor: EDLANDER, Thomas, 192 56 Sollentuna (SE)
(74) Representative: AWA Sweden AB
(86) International application number: PCT/SE2016/051052
(87) International publication number: WO 2017/091124

(56) References cited:
- GB-A- 264 772
- GB-A- 2 485 023
- JP-A- 2015 086 852
- US-A- 1 586 492

## Description

### Technical field

The present disclosure generally relates to wave power, and more particularly to devices for harvesting energy from water waves (see for example JP 2015 086852 A and US 1586492 A).

### Background

Vast amounts of energy are carried by waves on seas and oceans around the world. Even if only a small fraction of the energy carried by these waves could be harvested, wave power could become an important source of renewable energy. Different ways to harvest energy from waves have been proposed, but harvesting of energy from waves is associated with a number of problems. Size, frequency and/or direction of the waves at a particular location may change, making it difficult to efficiently harvest energy carried by the waves. For example, the size of one wave may differ quite a lot from the size of the next wave, making it difficult for a device harvesting energy from the waves to adapt to the waves. Further, devices arranged to harvest energy from waves may be particularly subjected to wear and strong external forces, since such devices are typically arranged in the water all year around, regardless temperature, storms or bad weather. Service and repairs of such devices may also be difficult due to the fact that at least some of these devices may be arranged off the coast and/or at least partially under water.

For at least these reasons, it would be advantageous to provide new alternative devices for harvesting energy from waves.

### Summary

To better address one or more of the above mentioned problems, devices having the features defined in the independent claim are provided.

Hence, a device for transforming wave energy into a rotating motion is provided. The device comprises a shaft and at least one section. The at least one section comprises a body having a passage extending from a front side of the body towards a back side of the body. The passage is intended to receive a water wave from the front side of the body. The at least one section comprises a first member movably arranged in the passage between a first position and a second position. The first position is a resting position. The second position is an elevated position relative to the first position. The first member is arranged to be elevated by the water wave. The at least one section comprises a weight movably arranged between a first position and a second position. The first position of the weight is a resting position. The second position of the weight is an elevated position relative to the first position of the weight. The weight is arranged to be elevated by the first member. The at least one section comprises a first coupling arrangement arranged to transfer motion of the weight to the shaft. The weight is arranged to be moved by gravity towards its resting position, thereby generating, via the first coupling arrangement, a rotating motion of the shaft.

When a wave is received by (or in) the passage, the first member may be elevated by the wave, and the weight may be elevated by the first member. Thereafter, the weight may be moved by gravity towards its resting position, thereby generating, via the first coupling arrangement, a rotating motion of the shaft, which may for example be provided as input to a generator for generating electricity. In this way, energy carried by the wave may be harvested.

The shaft may for example be coupled to a generator for generating electricity.

The passage may for example extend from the front side of the body to the back side of the body.

According to the invention, the first member is a shutter or hatch arranged to at least partially block the passage when in its resting position.

The first member may for example be arranged to be elevated when the wave is received by the passage.

The first member may for example be arranged to be elevated towards its elevated position by the wave.

The first member may for example be arranged to be elevated from its resting position towards its elevated position by the wave.

The first member may for example be arranged to be moved by gravity towards its resting position.

The weight may for example be arranged above the first member.

The weight may for example be arranged to be elevated by the first member when the first member is elevated by the wave.

The weight may for example be arranged to be elevated by the first member via a second coupling arrangement.

The weight may for example be arranged to be elevated towards its elevated position by the first member.

The first coupling arrangement may for example be arranged to transfer downward motion of the weight into the rotating motion of the shaft.

The weight may for example be arranged to be moved by gravity from its elevated position towards its resting position, thereby generating, via the first coupling arrangement, a rotating motion of the shaft.

According to the invention, the at least one section comprises a second coupling arrangement and a controller. The controller is arranged to control the second coupling arrangement between at least a first mode, in which the second coupling arrangement is arranged to transfer upward motion of the first member to upward motion of the weight, and a second mode, in which the weight is disconnected (or disengaged or released) from the first member for allowing upward motion of the first member relative to the weight.

Energy carried by waves is stored as potential energy via elevation of the weight. This stored energy may be employed for causing a rotating motion of the shaft when the weight is moved downwards by gravity towards its resting position. This downward motion of the weight may for example cause an even (or steady or constant) rotation of the shaft which may be desirable as input to a generator for generating electricity. The ability to disconnect the weight from the first member allows a wave (e.g. a wave of unexpected size or a wave received at an unexpected time) to elevate the first member without affecting an ongoing downward motion of the weight. In this way, a more even rotation of the shaft may be provided. Consecutive incoming waves may have varying sizes, and the time between consecutive waves may vary. The ability to disconnect the weight from the first member allows the device to mitigate (or reduce) the impact of these variations on the rotation of the shaft.

The weight may for example be arranged to be disconnected (or disengaged or released) from the weight in the second mode for allowing motion (e.g. upward and/or downward motion) of the first member relative to the weight.

The second mode may for example allow the first member to return to its resting position faster than the weight.

The second coupling arrangement may for example be arranged, when in the first mode, to prevent downward motion of the first member relative to the weight.

According to the invention, the controller may be configured to control the second coupling arrangement to switch to the second mode in response to the first member and the weight being in their respective elevated positions. Additionally or alternatively, the controller may be configured to control the second coupling arrangement to switch to the first mode in response to the first member and the weight being in their respective resting positions.

When the weight is in its elevated position, potential energy has been stored and may be employed to cause the shaft to rotate when gravity causes the weight to return towards its resting position. Disconnecting the weight from the first member when the weight is in its elevated position allows waves to elevate the first member without affecting the downward motion of the weight.

When the weight has reached its resting position, new energy may be stored as potential energy by once again elevating the weight towards its elevated position. Switching the coupling arrangement to the first mode when the weight and the first member are in their respective resting positions allows the weight to be elevated by the first member when the first member is elevated from its resting position by a wave.

The controller may for example be configured to control the second coupling arrangement to switch from the first mode to the second mode in response to the first member and the weight being in their respective elevated positions.

The controller may for example be configured to control the second coupling arrangement to switch from the second mode to the first mode in response to the first member and the weight being in their respective resting positions.

The controller may for example be configured to control the second coupling arrangement to switch to the first mode in response to the weight being sufficiently close to its resting position (such as closer than a predefined distance from its resting position).

According to some embodiments, the at least one section may comprise a plurality of weights. The controller may be arranged to estimate a size (or height or energy) of an incoming water wave, and to control, based on the estimated size, to which of the weights an upward motion of the first member is to be transferred.

The amount of energy carried by the incoming wave depends on the size of the wave. Larger waves may carry sufficient energy to cause elevation of heavier (or a larger number of) weights while smaller waves may only carry sufficient energy to cause elevation of less heavy (or a smaller number of) weights. By appropriately selecting the weights to which upward motion of the first member is to be transferred, the energy carried by the incoming waves may be more efficiently transferred to the shaft.

The size (or height or energy) of the incoming wave may for example be estimated based on input from one or more sensors (e.g. from an optical sensor or camera).

According to some embodiments, an end of the first member may be articulately connected to the body. The first member may for example have an elongated shape. The first member may for example extend from the end (articulately connected to the body) along the passage towards the back side of the body. The first member may for example be arranged to at least partially block the passage when in its resting position.

By at least partially blocking the passage, when in its resting position, the first member may be more efficiently elevated towards its elevated position by waves received by the passage.

The end of the first member may for example be articulately connected at an end of the passage at the front side of the body.

The end of the first member may for example be articulately connected to a ceiling (or roof) of the passage.

According to some embodiments, the weight may be arranged at (or attached to, or mounted at) an elongated member coupled to the shaft.

The weight may for example be arranged at an end of the elongated member, and the other end of the elongated member may be coupled to the shaft, e.g. via a ratchet wheel.

The other end of the elongated member (i.e. the end opposite to the end where the weight 160 is arranged) may for example be articulately connected to the body.

The elongated member may for example be a lever.

According to some embodiments, the first coupling arrangement may be (or may comprise) a mechanical coupling arrangement or a hydraulic coupling arrangement. The first coupling arrangement may for example comprise both mechanical and hydraulic components.

According to some embodiments, the at least one section may comprise a controller arranged to control when to allow the weight to move towards its resting position.

Potential energy stored when the weight is in its elevated position may be employed, when the weight moves from its elevated position towards its resting position, to provide rotation of the shaft. Multiple sections (with respective weights) may for example cooperate for providing the rotation of the shaft. Control of when to allow a weight to move towards its resting position improves the ability of the sections to cooperate. For example, the sections may take turns to provide the rotation, depending in when new incoming waves of suitable sizes are expected at the respective sections. This allows for a more efficient transfer of energy from the incoming waves to the rotating motion of the shaft.

The controller may for example be arranged to control a break or stopper for preventing the weight to move towards its resting position.

According to some embodiments, the at least one section may further comprise a stopper. The first member may be arranged to be in abutment against the stopper when in its resting position. The stopper may be arranged to allow water to pass below the first member in the passage when the first member is in its resting position.

Having the first member resting against the stopper, instead of resting against a floor or the passage, may improve the efficiency by which the first member is elevated by waves received in the passage.

The stopper may for example be arranged in the passage.

The stopper may for example be arranged at a distance from a floor of the passage.

The device may for example be adapted to be arranged in water (e.g. in a sea or ocean) such that sea level is above the stopper.

According to some embodiments, the device may comprise a plurality of sections comprising respective bodies, first members, weights, and first coupling arrangements. The respective first coupling arrangements may be arranged to transfer motion of the respective weights to the shaft.

The sections may for example be arranged to cooperate for providing the rotating motion of the shaft, which facilitates provision of a more even (or steady) rotation of the shaft. For example, the different sections may take turns to provide the rotation, depending on the amount of potential energy currently stored by the weights of the respective sections and/or depending on when new incoming waves of suitable sizes are expected at the respective sections.

The device may for example comprise a controller arranged to control when the respective weights are to be allowed to move towards their respective resting positions. The controller may for example be arranged to control breaks or stoppers for preventing the respective weight to move towards their respective resting positions.

Each of the plurality of sections may for example comprise a body having a passage extending from a front side of the body towards a back side of the body, wherein the passage is intended to receive a water wave from the front side of the body.

Each of the plurality of sections may for example comprise a first member movably arranged in the passage between a first position and a second position, wherein the first position is a resting position, wherein the second position is an elevated position relative to the first position, and wherein the first member is arranged to be elevated by the water wave.

Each of the plurality of sections may for example comprise a weight movably arranged between a first position and a second position, wherein the first position of the weight is a resting position, wherein the second position of the weight is an elevated position relative to the first position of the weight, and wherein the weight is arranged to be elevated by the first member.

Each of the plurality of sections may for example comprise a first coupling arrangement arranged to transfer motion of the weight of the section to the shaft, wherein the weight of the section is arranged to be moved by gravity towards its resting position, thereby generating, via the first coupling arrangement of the section, a rotating motion of the shaft.

### Brief description of the drawings

In what follows, embodiments will be described in greater detail and with reference to the accompanying drawings, on which:
Fig. 1 is a perspective view of a device for transforming wave energy into a rotating motion, according to an embodiment;
Figs. 2-5 are cross sectional views along the line II- II of the device shown in Fig. 1, showing different possible positions of a first member and a weight; and
Fig. 6 is a top view of first members of the device shown in Fig. 1.

All the figures are schematic and generally only show parts which are necessary in order to elucidate the respective embodiments, whereas other parts may be omitted or merely suggested. It will be appreciated that the figures may not be to scale.

### Detailed description

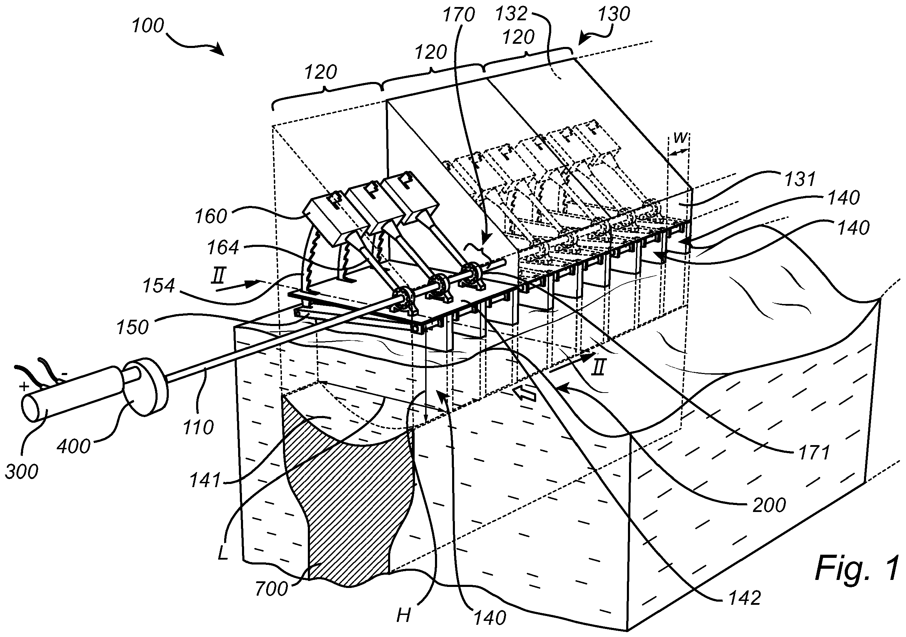

Fig. 1 is a perspective view of a device 100 for transforming wave energy into a rotating motion, according to an embodiment. The device 100 comprises a shaft 110 and a plurality of sections 120. In Fig. 1, one of the sections 120 has been partly cut away to show its content.

Each section 120 comprises a body 130 having a passage 140 extending from a front side 131 of the body 130 towards a back side 132 of the body 130. The passage 140 is intended to receive a water wave 200 arriving from the front side 131 of the body 130.

The passage 140 may for example extend straight through the body 130 from the front side 131 of the body 140 all the way to the back side 132 of the body. Embodiments may also be envisaged in which the passage 140 may bend downwards, upwards and/or to the side before exiting the body 130.

Each section 120 further comprises a first member 150, a weight 160 and a first coupling arrangement 170.

The first member 150 is movably arranged in the passage 140 between a first position 151 and second position 152. The weight 160 is also movably arranged between a fist position 161 and a second position 162.

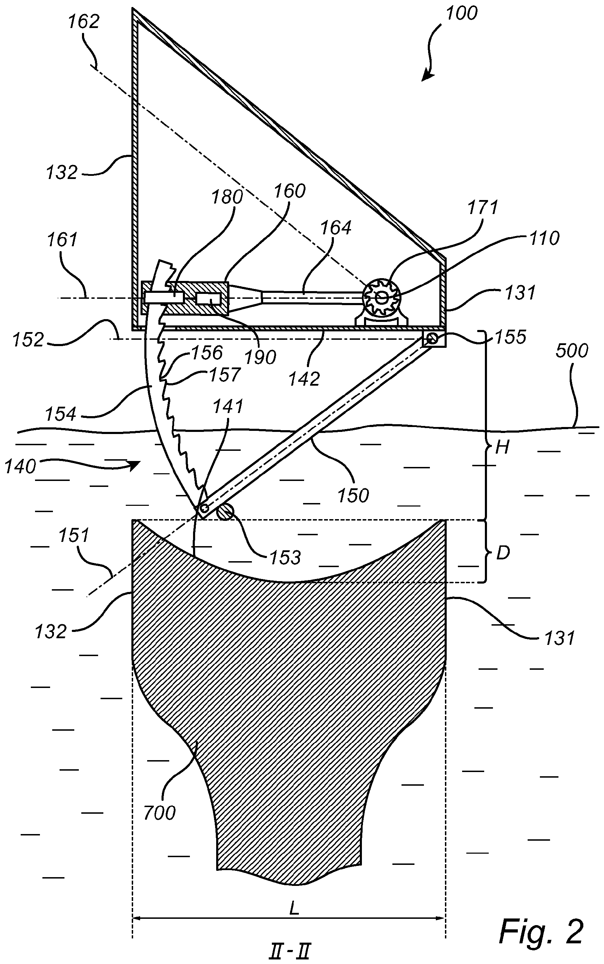

Figs. 2-5 are cross-sectional views along the line II- II of the device 100, showing different possible positions of the first member 150 and the weight 160.

Fig. 2 shows when the first member 150 is in its first position 151, which is a resting position 151 in which the first member 150 at least partially blocks the passage 140. The resting position 151 is exemplified herein by the first member 150 being in abutment (or resting) against a stopper 153 arranged above the floor 141 of the passage 140, so that water may pass below the first member 150 when it is in its resting position 151.

Embodiments may also be envisaged in which the resting position 151 corresponds to the first member 150 being in abutment against the floor 141 of the passage 140, so that the passage 140 is blocked by the first member 150.

The first member 150 may for example be a shutter or hatch for at least partially blocking the passage 140 when in its first position 151.

In Fig. 2, the weight 160 is in its first position 161, which is a resting position 161. The resting position 161 of the weight 160 may for example correspond to the weight 160 being in abutment (or resting) against a stopper (not shown in Fig. 2) or against a roof 142 of the passage 140.

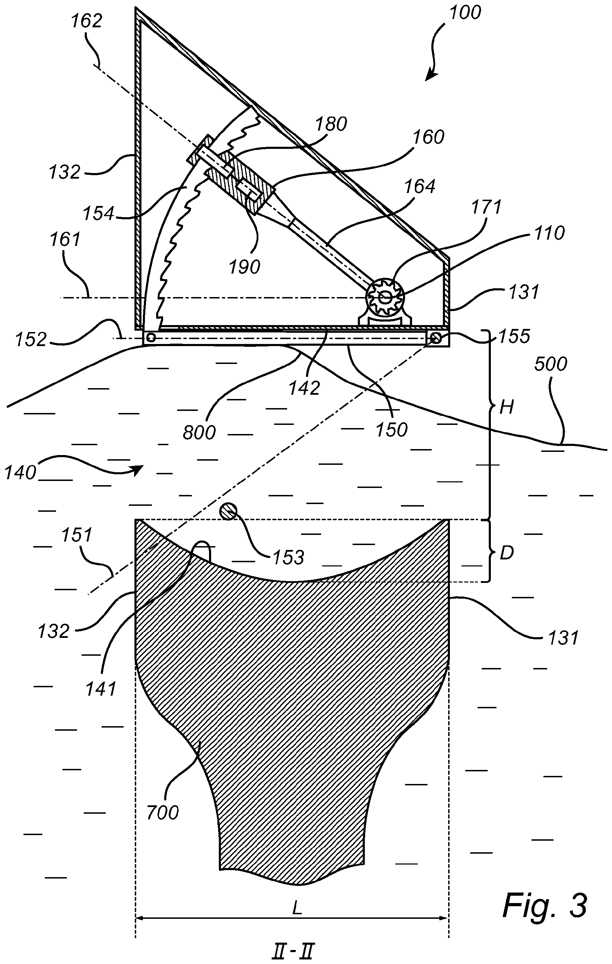

Fig. 3 shows when the first member 150 is in its second position 152, which is an elevated position 152 relative to the first position 151. The first members 150 shown in Fig. 1 are also in elevated positions.

The first member 150 is arranged to be elevated towards the second position 152 by water waves received by the passage 140. In other words, when a water wave 200 is received by the passage 140 (i.e. when a water wave is received from the right in Figs. 2-5), the wave 200 will move the first member 150 upwards towards the elevated position 152. If the wave 200 is large enough, the first member 150 will be elevated all the way up to the elevated position 152. If the wave 200 is relatively small, the first member 150 may for example only be elevated partway towards the elevated position 152, or may not be elevated at all by the wave 200.

Fig. 3 shows a wave 800 which has been received by the passage 140 and which has elevated the first member 150 all the way to its elevated position 152. As shown in Fig. 3, the wave 800 has been deformed via its interaction with the first member 150.

In Fig. 3, the weight 160 is also in its second position 162, which is an elevated position 162 relative to the first position 161 of the weight 160. This corresponds to the positions of the weights 160 shown in Fig. 1.

The weight 160 is arranged to be elevated towards its elevated position 162 by the first member 150. In other words, when the first member 150 is moved upwards by the wave 800, it may cause the weight 160 to move upwards towards the elevated position 162 of the weight 160.

The weight 160 may for example be arranged above the first member 150, and a connecting member 154 (or pin, or protruding element) may for example be arranged between the first member 150 and the weight 160 to push the weight 160 upwards when the first member 150 is elevated by the wave 800.

The weight 160 is arranged to be moved by gravity towards its resting position 161. Similarly, the first member 150 is arranged to be moved by gravity towards its resting position 151.

In Fig. 1, each of the first members 150 has been elevated by a wave and has not yet returned to its resting position 151 when the next wave 200 approaches.

The first coupling arrangement 170 is arranged to transfer motion of the weight 160 to the shaft 110. When the weight 160 moves towards its resting position 161, a rotating motion of the shaft 110 is generated via the first coupling arrangement 170.

In the present embodiment, the first member 150 is flat, and an end 155 of the first member 150 is articulately connected to the body 130 (e.g. via a hinge) at the end of the passage 140 at the front side 131 of the body 130. The end 155 of the first member 150 is articulately connected at the ceiling 142 (or roof) of the passage 140. The first member 150 has an elongated shape and extends from the end 155 along the passage 140 towards the back side 132 of the body 130.

When in its resting position 151, the first member 150 extends downwards from the ceiling 142 (or roof) of the passage 140 so as to at least partially block the passage 140. This causes wave energy to be more efficiently captured by the first member 150 when a wave 800 is received in the passage 140.

The floor 141 of the passage 140 is exemplified herein by a floor 141 which curves (or bends) downwards a distance D below the stopper 153 against which the first member 150 rests when in its resting position 151. The curved shape of the floor 141 leaves a space between the first member 150 and the floor 141 of the passage, so that water is allowed to pass between the first member 150 and the floor 141 of the passage 140.

The device 100 is adapted to be arranged in the sea or ocean such that the sea level 500 (i.e. the water level when no wave is received, or the average water level) is located approximately in the middle of (the vertical extension of) the passage 140. Fig. 1 shows an example state where the sea is calm so that no waves are received, and where the surface of the water is located approximately in the middle of the vertical extension of the passage 140. The space in the passage 140 below the stopper 153 allows received waves 800 to more efficiently elevate the first member 150.

The first coupling arrangement 170 is exemplified herein by a mechanical coupling arrangement. The weight 160 is arranged at an end of an elongated member 164, such as a lever. The opposite end of the elongated member 164 is coupled to the shaft 110. The coupling of the elongated member 164 to the shaft 110 is such that downward motion of the weight 160 is transferred into a rotating motion of the shaft 110, while upward motion of the weight 160 is not transferred to the shaft 110. The elongated member 164 may for example be coupled to the shaft 110 via a ratchet wheel 171.

It will be appreciated that several different mechanical coupling arrangements 170 are possible for transferring downward motion of the weight 160 into a rotating motion of the shaft 110.

Embodiments may also be envisaged in which the first coupling arrangement 170 is a hydraulic coupling arrangement (not shown in Figs. 1-5). Downward motion of the weight 160 may for example cause hydraulic pressure to be transferred to a hydraulic motor (not shown in Figs. 1-5) which provides rotation of the shaft 110. Oil or some other hydraulic fluid may for example be employed to transfer downward motion of the weight 160 into a rotating motion of the shaft 110. If a hydraulic coupling arrangement is employed to rotate the shaft 110, there may be no need for the ratchet wheel 171 shown in Figs. 1-5.

In the embodiment described with reference to Figs. 1-5, each section 120 comprises a second coupling arrangement 180 and a controller 190.

The second coupling arrangement 180 is operable in a first mode, in which it transfers upward motion of the first member 150 to upward motion of the weight 160. The second coupling arrangement is also operable in a second mode in which the weight 160 is disconnected (or disengaged, or decoupled) from the first member 150 for allowing upward motion of the first member 150 relative to the weight 160.

The second coupling arrangement 180 may for example be provided in the form of an electromagnet 180 which, when activated by the controller 190, locks (or attaches, or fixes) the weight 160 to the connecting member 154. In other words, the first mode may correspond to the electromagnet 180 being activated by the controller 180, while the second mode may correspond to the electromagnet 180 being deactivated so as to let go of the connecting member 154.

The connecting member 154 may for example have a shape makes it easy for the second coupling arrangement 180 to lock on to it. The connecting member 154 may for example have notches 156 and/or protruding portions 157. The connecting member 154 may for example be toothed.

In the example shown in Figs. 1-5, the first member 150 is arranged to rotate around a hinge at the end 155, while the weight 160 is arranged to rotate around the shaft 110. As the first member 150 and the weight 160 do not rotate around a common axis of rotation, the connecting member 154 arranged to connect the first member 150 and the weight 160 may need to rotate and/or slide somewhat relative to the first member 150 and/or the weight 160 when the first member 150 and the weight 160 move between their respective first positions 151 and 161, and second positions 152 and 162. The skilled person is well-aware of how to design the appropriate connections between the connecting member 154 and the first member 150, and between the connecting member 154 and the weight 160, for achieving this.

Embodiments may also be envisaged in which the shaft 110 is placed such that the first member 150 may also rotate around the shaft 110, thereby obtaining a common axis of rotation for the first member 150 and the weight 160.

In the embodiment described with reference to Figs. 1-5, a controller 190 is arranged in each section 120, e.g. close to the respective second coupling arrangements 180. However, embodiments may be envisaged in which a common controller (not shown in Figs. 1-5) for some or all of the sections 120 is provided, e.g. arranged remotely from the sections 120, or arranged in one of the sections 120.

The controller 190 may be configured to control the second coupling arrangement 180 to switch to the second mode in response to the first member 150 and the weight 160 being in their respective elevated positions 152 and 162.

The first member 150 and the weight 160 may be moved by gravity towards their respective resting position 151 and 162. By disconnecting or releasing the weight 160 from the first member 150, the first member 150 and the weight 160 may return to their respective resting positions 151 and 161 independently of each other.

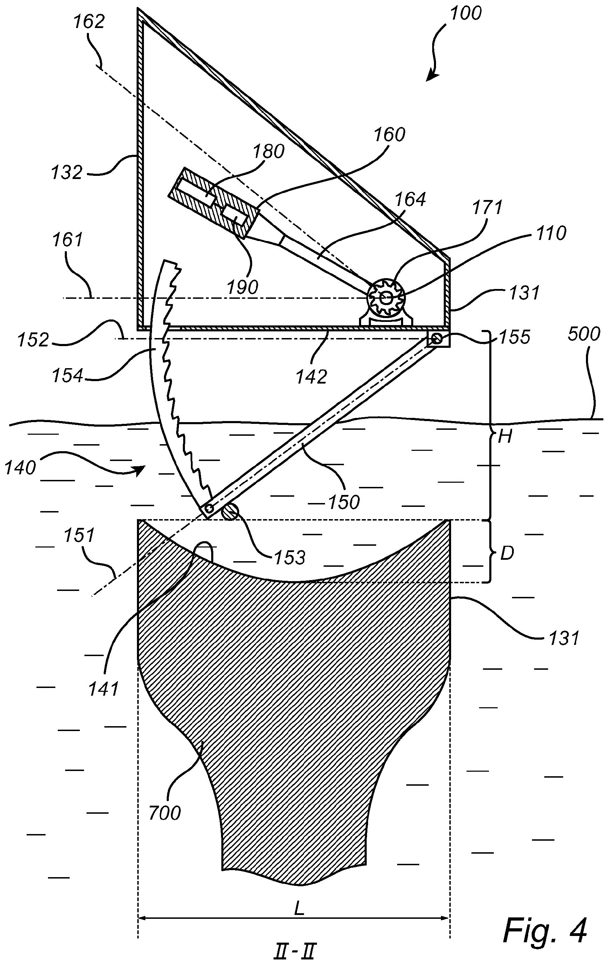

As illustrated in Fig. 4, the first member 150 may for example reach its resting position 151 while the weight 160 is still in its elevated position 162 or on its way down to its resting position 161.

The controller 190 may for example also be arranged (or configured) to control when to allow the weight 160 to be moved by gravity from its elevated position 162 towards its resting position 161, so as to control when the potential energy stored by the weight 160 is to be employed for rotating the shaft 110.

The controller 190 may for example employ a stopper (not shown in Figs. 1-5) or a brake (not shown in Fig. 1-5) to prevent the weight 160 from moving towards its resting position 161.

The rotating motion of the shaft 110 may be provided via cooperation of the different sections 120. Waves may be received at different times at the respective sections 120, or the different sections 120 may receive waves of different sizes. Based on the amount of energy stored in the respective weights 160 and/or the size or timing of incoming waves expected at the respective sections 120, the controllers 190 of the different sections 120 may control the weights 160 of the different sections 120 to take turns to provide the rotation of the shaft 110. In this way a more even rotation of the shaft 110 may be provided.

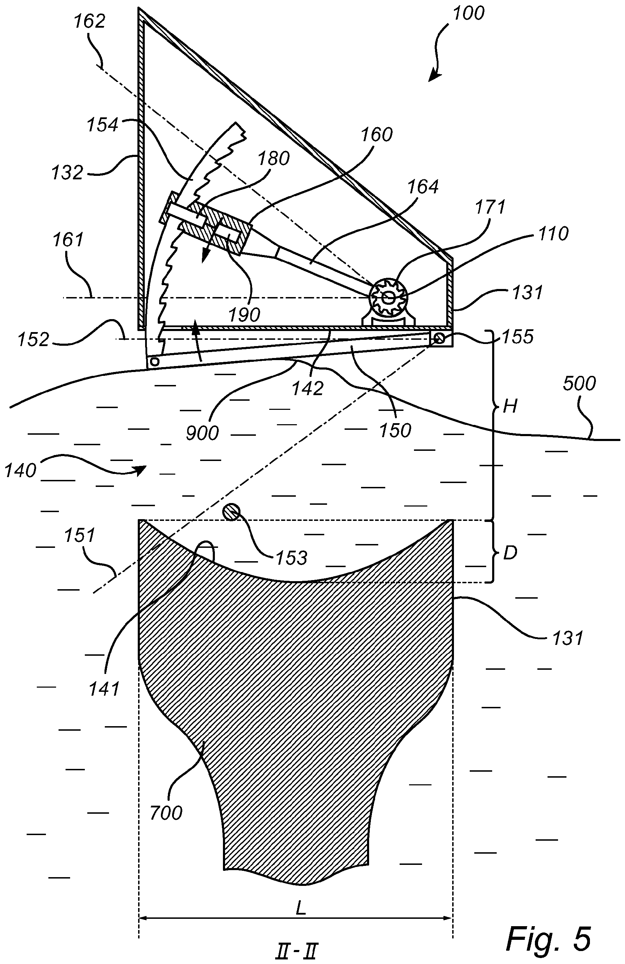

If a wave is received by the passage 140 before the weight 160 has reached its resting position 161, or at least a certain position close to its resting position 161, the second coupling arrangement 180 may for example prevent the upward motion of the first member 150 to affect the weight 160. This is illustrated in Fig. 5, where the first member 150 is being elevated by an incoming wave 900, but where an ongoing downward motion of the weight 160 is not affected by the elevation of the first member 150. This may cause the first member 150 to move closer to the weight 160, and part of the connecting member 154 to extend up through the weight 160. The controller 190 may have controlled the second coupling arrangement 180 to release (or disconnect) the weight 160 from the first member 150, for allowing an ongoing downward motion of the weight 160 to continue, so as to provide a more even (or more continuous) rotation of the shaft 110.

When to store more potential energy by elevating the weight 160, and when to use the stored potential energy to cause rotation of the shaft 110 may be controlled by the controller 190, e.g. based on the incoming waves 200 and/or cooperation between different sections 120 of the device 100 connected to the same shaft 110.

Waves 200 may for example be received at different times by the respective sections 120, and a more even rotation of the shaft 110 may be provided by cooperation between the different sections 120.

When the weight 160 has returned to its resting position 161, new potential energy may be stored by alleviating the weight 160. The first member 150 may for example be allowed to return to its resting position 151 before the weight 160 is fixed (or attached) to the connecting member 154 by the second coupling arrangement 180. Hence, the controller 190 may for example control the second coupling arrangement 180 to switch to the first mode (or connected mode) in response to the first member 150 and the weight 160 being in their respective resting positions 151 and 161.

The device 100 (or the respective sections 120 of the device 100) may for example monitor incoming waves 200 for estimating the size and/or timing of waves 200 which will be received by the passages 140. Based on the size and/or timing of an incoming wave 200, and/or based on the respective positions of the first member 150 and the weight 160, the controller 190 may decide whether to control the second coupling arrangement 180 into the first or second mode. Such control may improve the efficiency by which wave power is transformed into rotation of the shaft 110, and/or may allow for providing a more even rotation of the shaft 110.

In the present embodiment, the shaft 110 is coupled to a generator 300 for generating electricity. In other words, the device 100 is a power plant for transforming wave power into electricity.

The shaft 110 may for example be coupled to the generator 300 via a gearbox 400 (or transmission) for obtaining a suitable rotational speed (or revolutions per minute, RPM).

The controller 180 may for example be powered by the generator 300, or may be connected to some other power supply.

In the present embodiment, the device 100 is mounted at a base 700 (or at a foundation 700) so as to be held firmly in place to withstand forces cased by the incoming waves 200 and to withstand forces cased by storms.

The device 100 may be arranged in the sea or ocean such that the sea level is at least approximately in the middle of (the vertical extension of) the passage 140.

The device 100 may be arranged at a geographical location where large incoming waves are common. The device 100 may for example be designed to receive waves with a height, through to crest, of 6 meters.

It will be appreciated that incoming waves may vary in size, and that a wave height of 6 meters serves as an example of an average wave height.

The device 100 may be arranged at a geographical location where the waves do not break (or where the waves have not yet started to break). The device 100 may for example be arranged at a location where the water is so deep that the sea floor does not cause the waves to break.

A width W of the passage 140 may for example be 3 meters. A height H of the passage may for example be 6 meters. A length L of the passage 140 may for example be several times the width W and/or the height H of the passage 140, such as for example 18 meters (it will be appreciated that Figs. 1-5 are not drawn to scale, and that the length L may be relatively longer than shown in Figs. 1-5). Similarly, a thickness of the body 130 (i.e. a distance from the front side 131 of the body 130 to the back side 132 of the body 130) may for example be 18 meters.

It will be appreciated that other widths W, heights H and/or lengths L may also be envisaged. The width W, height H and/or length L may for example be selected so as to adapt the device 100 to the average wave size it is supposed to receive. The base 700 (or foundation 700) may for example be up to 15 to 20 meters tall, i.e. the base 700 may for example extend up to 15 to 20 meters from down where it is mounted up to where the openings 140 are arranged.

An angle of rotation provided by the weight 160 moving once from its elevated position 162 to its resting position 161 may for example be 60 degrees. Six passages 140 and associated weights 160 may for example be employed to rotate the shaft 110, so as to obtain a full revolution of 360 degrees.

It will be appreciated that the device 100 may comprise any number of sections 120. The device 100 may for example comprise a single section 120. Increasing the number of sections 120 coupled to the same shaft 110 allows for providing a more even (or smoother) rotation of the shaft 110.

The sections 120 may for example be arranged in a row.

In some embodiments, all of the sections 120 of the device 100 may be coupled to the same shaft 110. In other embodiments, some sections 120 may be coupled to one shaft (for causing that's haft to rotate) and other sections 120 may be coupled to other shafts (for causing these shafts to rotate).

Each section 120 of the device 100 may comprise one or more passages 140. It will be appreciated that different sections 120 may comprise different numbers of passages 140. It will also be appreciated that the sections 120 may be arranged adjacent to each other or may be separated by gaps or by other parts of the device 100.

Parts of the body 130 arranged between the passages 140 may be arranged to contribute to the structural integrity of the body 130. The passages 140 may for example be arranged as close to each other as possible, while still allowing sufficient room for material to carry the load provided by the weights 160.

In the embodiment described with reference to Figs. 1-5, the passages 140 may for example be narrower towards the back side 132 of the body 130 where the weights 160 are arranged, so as to allow extra room in between the passages 140 for carrying the load provided by the weights 160.

The space between the passages 140 may for example include room more maintenance and/or repairs.

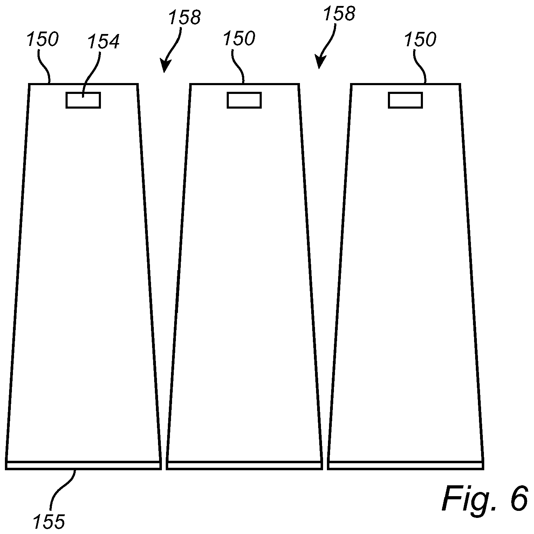

Fig. 6 shows the first members 150 of a section 120 of the device 100 from above, when the first members 150 are in their elevated positions 152. In order to fit in passages 140 which are narrower towards the back side 132 of the body 130, the first members 150 are also narrower towards the back side 132 of the body 130 where the connecting members 154 are arranged. In other words, the first members 150 are wider towards the end 155 where the first members 150 are articulately connected to the body 130. Extra room 158 is provided between the first members 150 (and the associated passages 140) for material carrying the load provided by the weights 160 (not shown in Fig. 6) arranged above the first members 150.

The device 100 (e.g. shaft 110, the sections 120, the first member 150, the weight 160, and/or the first coupling arrangement 170) may for example be made of metal, such as for example steel or aluminum.

The body 130 may for example have a metal hull or casing, and may be at least partially hollow.

The weight 160 may for example weigh 1, 2, 3 or 4 metric tons.

The sections 120 may for example be constructed in a wharf or harbor (or on land), and may be transported out to sea where they may be mounted at the base 700.

The person skilled in the art realizes that the present invention by no means is limited to the preferred embodiments described above. On the contrary, many modifications and variations are possible within the scope of the appended claims. For example, although the weight 160 illustrated in Figs. 1-5 is arranged above the first member 150, it will be appreciated that the weight 160 may be located elsewhere. For example, the weight 160 may be arranged below the first member 150, and a connecting member similar to the connecting member 154, described with reference to Figs. 1-5, may extend downwards from the first member 150 to the weight 160.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A device (100) for transforming wave energy into a rotating motion, the device comprising:
a shaft (110); and
at least one section (120) comprising:
a body (130) having a passage (140) extending from a front side (131) of the body towards a back side (132) of the body, the passage being intended to receive a water wave (200, 800, 900) from the front side of the body;
a first member (150) movably arranged in the passage between a first and a second position (151, 152), wherein the first position is a resting position, wherein the second position is an elevated position relative to the first position, wherein the first member is arranged to be elevated by said water wave, wherein the first member is a shutter or hatch arranged to at least partially block the passage when in its resting position;
a weight (160) movably arranged between a first and a second position (161, 162), wherein the first position of the weight is a resting position, wherein the second position of the weight is an elevated position relative to the first position of the weight, and wherein the weight is arranged to be elevated by the first member;
a first coupling arrangement (170, 171) arranged to transfer motion of the weight to the shaft;
a second coupling arrangement (180); and
a controller (190) arranged to control the second coupling arrangement between at least a first mode, in which the second coupling arrangement is arranged to transfer upward motion of the first member to upward motion of the weight, and a second mode, in which the weight is disconnected from the first member for allowing upward motion of the first member relative to the weight, wherein the controller is configured to:
control the second coupling arrangement to switch to the second mode in response to the first member and the weight being in their respective elevated positions; or
control the second coupling arrangement to switch to the first mode in response to the first member and the weight being in their respective resting positions, wherein the weight is arranged to be moved by gravity towards its resting position, thereby generating, via the first coupling arrangement, a rotating motion of the shaft.

2. The device of claim 1, wherein the at least one section comprises:
a plurality of weights,
wherein the controller is arranged to estimate a size of an incoming water wave (200), and to control, based on the estimated size, to which of the weights an upward motion of the first member is to be transferred.

3. The device of any of the preceding claims, wherein an end (155) of the first member is articulately connected to the body, wherein the first member has an elongated shape and extends from said end along the passage towards the back side of the body, and wherein the first member is arranged to at least partially block the passage when in its resting position.

4. The device of any of the preceding claims, wherein the weight is arranged at an elongated member (164) coupled to the shaft.

5. The device of any of the preceding claims, wherein the first coupling arrangement is a mechanical coupling arrangement or a hydraulic coupling arrangement.

6. The device of any of the preceding claims, wherein the controller (190) is arranged to control when to allow the weight to move towards its resting position.

7. The device of any of the preceding claims, wherein the at least one section further comprises:
a stopper (153),
wherein the first member is arranged to be in abutment against the stopper when in its resting position, and wherein the stopper is arranged to allow water to pass below the first member in the passage when the first member is in its resting position.

8. The device of any of the preceding claims, comprising:
a plurality of sections (120) comprising respective bodies (130), first members (150), weights (160), and first coupling arrangements (170),
wherein the respective first coupling arrangements are arranged to transfer motion of the respective weights to said shaft.

## Patentansprüche

1. Vorrichtung (100) zum Umwandeln von Wellenenergie in eine Kreisbewegung, die Vorrichtung umfassend:
eine Welle (110); und
mindestens einen Abschnitt (120), umfassend:
einen Körper (130), der einen Durchlass (140) aufweist, der sich von einer Vorderseite (131) des Körpers zu einer Rückseite (132) des Körpers hin erstreckt, wobei der Durchlass dazu vorgesehen ist, um eine Wasserwelle (200, 800, 900) von der Vorderseite des Körpers aufzunehmen;
ein erstes Element (150), das beweglich in dem Durchlass zwischen einer ersten und einer zweiten Position (151, 152) angeordnet ist, wobei die erste Position eine Ruheposition ist, wobei die zweite Position eine erhöhte Position relativ zu der ersten Position ist, wobei das erste Element angeordnet ist, um durch die Wasserwelle angehoben zu werden, wobei das erste Element eine Klappe oder Luke ist, die angeordnet ist, um den Durchlass mindestens teilweise zu blockieren, wenn es sich in der Ruheposition befindet;
ein Gewicht (160), das beweglich zwischen einer ersten und einer zweiten Position (161, 162) angeordnet ist, wobei die erste Position des Gewichts eine Ruheposition ist, wobei die zweite Position des Gewichts eine erhöhte Position relativ zu der ersten Position des Gewichts ist und wobei das Gewicht angeordnet ist, um von dem ersten Element angehoben zu werden;
eine erste Kupplungsanordnung (170, 171), die angeordnet ist, um eine Bewegung des Gewichts an die Welle zu übertragen;
eine zweite Kupplungsanordnung (180); und
eine Steuerung (190), die angeordnet ist, um die zweite Kupplungsanordnung zwischen mindestens einem ersten Modus, in dem die zweite Kupplungsanordnung angeordnet ist, um eine Aufwärtsbewegung des ersten Elements in eine Aufwärtsbewegung des Gewichts zu übertragen, und einem zweiten Modus, in dem das Gewicht von dem ersten Element abgekoppelt wird, um eine Aufwärtsbewegung des ersten Elements relativ zu dem Gewicht zu ermöglichen, zu steuern, wobei die Steuerung konfiguriert ist, um:
die zweite Kupplungsanordnung zu steuern, um in Reaktion darauf, dass das erste Element und das Gewicht sich in ihren jeweiligen erhöhten Positionen befinden, in den zweiten Modus zu wechseln; oder
die zweite Kupplungsanordnung zu steuern, um in Reaktion darauf, dass das erste Element und das Gewicht sich in ihren jeweiligen Ruhepositionen befinden, in den ersten Modus zu wechseln, wobei das Gewicht angeordnet ist, um durch Schwerkraft in seine Ruheposition bewegt zu werden und dadurch über die erste Kupplungsanordnung eine Kreisbewegung der Welle zu erzeugen.

2. Vorrichtung nach Anspruch 1, wobei der mindestens eine Abschnitt umfasst:
eine Vielzahl von Gewichten,
wobei die Steuerung angeordnet ist, um eine Größe einer ankommenden Wasserwelle (200) zu schätzen und, basierend auf der geschätzten Größe, zu steuern, an welches der Gewichte eine Aufwärtsbewegung des ersten Elements übertragen werden soll.

3. Vorrichtung nach einem der vorhergehenden Ansprüche, wobei ein Ende (155) des ersten Elements gelenkig mit dem Körper verbunden ist, wobei das erste Element eine längliche Form aufweist und sich von dem Ende entlang des Durchlasses zu der Rückseite des Körpers hin erstreckt und wobei das erste Element angeordnet ist, um den Durchlass mindestens teilweise zu blockieren, wenn es sich in der Ruheposition befindet.

4. Vorrichtung nach einem der vorhergehenden Ansprüche, wobei das Gewicht an einem länglichen Element (164), das mit der Welle gekoppelt ist, angeordnet ist.

5. Vorrichtung nach einem der vorhergehenden Ansprüche, wobei die erste Kupplungsanordnung eine mechanische Kupplungsanordnung oder eine hydraulische Kupplungsanordnung ist.

6. Vorrichtung nach einem der vorhergehenden Ansprüche, wobei die Steuerung (190) angeordnet ist, um zu steuern, wann das Gewicht in seine Ruheposition bewegt werden kann.

7. Vorrichtung nach einem der vorhergehenden Ansprüche, wobei der mindestens eine Abschnitt ferner umfasst:
einen Stopper (153),
wobei das erste Element angeordnet ist, um sich in Anlage an den Stopper zu befinden, wenn es sich in der Ruheposition befindet, und wobei der Stopper angeordnet ist, um zu ermöglichen, dass Wasser unterhalb des ersten Elements in dem Durchlass fließt, wenn das erste Element sich in seiner Ruheposition befindet.

8. Vorrichtung nach einem der vorhergehenden Ansprüche, umfassend:
eine Vielzahl von Abschnitten (120), die jeweilige Körper (130), erste Elemente (150), Gewichte (160) und erste Kupplungsanordnungen (170) umfassen
wobei die jeweiligen ersten Kupplungsanordnungen angeordnet sind, um eine Bewegung der jeweiligen Gewichte an die Welle zu übertragen.

## Revendications

1. Dispositif (100) pour transformer de l'énergie des vagues en un mouvement de rotation, le dispositif comprenant :
un arbre (110) ; et
au moins une section (120) comprenant :
un corps (130) ayant un passage (140) s'étendant d'un côté avant (131) du corps vers un côté arrière (132) du corps, le passage étant destiné à recevoir une vague d'eau (200, 800, 900) à partir du côté avant du corps ;
un premier élément (150) disposé dans le passage de manière mobile entre des première et seconde positions (151, 152), la première position étant une position de repos, la seconde position étant une position élevée par rapport à la première position, le premier élément étant agencé pour être élevé par ladite vague d'eau, le premier élément étant un obturateur ou clapet agencé pour bloquer au moins partiellement le passage lorsqu'il est dans sa position de repos ;
un poids (160) disposé de manière mobile entre des première et seconde positions (161, 162), la première position du poids étant une position de repos, la seconde position du poids étant une position élevée par rapport à la première position du poids, et le poids étant agencé pour être élevé par le premier élément ;
un premier agencement d'accouplement (170, 171) agencé pour transférer un mouvement du poids à l'arbre ;
un second agencement d'accouplement (180) ; et
un dispositif de commande (190) agencé pour commander le second agencement d'accouplement entre au moins un premier mode, dans lequel le second agencement d'accouplement est agencé pour transférer un mouvement ascendant du premier élément à un mouvement ascendant du poids, et un second mode, dans lequel le poids est séparé du premier élément pour permettre un mouvement ascendant du premier élément par rapport au poids, le dispositif de commande étant configuré pour :
commander le second agencement d'accouplement pour passer au second mode en réponse au fait que le premier élément et le poids sont dans leurs positions élevées respectives ; ou
commander le second agencement d'accouplement pour passer au premier mode en réponse au fait que le premier élément et le poids sont dans leurs positions de repos respectives, le poids étant agencé pour être déplacé par gravité vers sa position de repos, générant ainsi, par l'intermédiaire du premier agencement d'accouplement, un mouvement de rotation de l'arbre.

2. Dispositif selon la revendication 1, dans lequel l'au moins une section comprend :
une pluralité de poids,
le dispositif de commande étant agencé pour estimer une taille d'une vague d'eau entrante (200) et commander, sur la base de la taille estimée, vers lequel des poids un mouvement ascendant du premier élément doit être transféré.

3. Dispositif selon l'une quelconque des revendications précédentes, dans lequel une extrémité (155) du premier élément est reliée au corps de manière articulée, le premier élément ayant une forme allongée et s'étendant à partir de ladite extrémité le long du passage vers le côté arrière du corps, et le premier élément étant agencé pour bloquer au moins partiellement le passage lorsqu'il est dans sa position de repos.

4. Dispositif selon l'une quelconque des revendications précédentes, dans lequel le poids est disposé au niveau d'un élément allongé (164) couplé à l'arbre.

5. Dispositif selon l'une quelconque des revendications précédentes, dans lequel le premier agencement d'accouplement est un agencement d'accouplement mécanique ou un agencement d'accouplement hydraulique.

6. Dispositif selon l'une quelconque des revendications précédentes, dans lequel le dispositif de commande (190) est agencé pour commander quand permettre au poids de se déplacer vers sa position de repos.

7. Dispositif selon l'une quelconque des revendications précédentes, dans lequel l'au moins une section comprend en outre :
une butée (153),
le premier élément étant agencé pour être en butée contre la butée lorsqu'il est dans sa position de repos, et la butée étant agencée pour permettre à de l'eau de passer sous le premier élément dans le passage lorsque le premier élément est dans sa position de repos.

8. Dispositif selon l'une quelconque des revendications précédentes, comprenant :
une pluralité de sections (120) comprenant des corps (130), premiers éléments (150), poids (160) et premiers agencements d'accouplement (170) respectifs,
les premiers agencements d'accouplement respectifs étant agencés pour transférer un mouvement des poids respectifs audit arbre.
